# EUROPÄISCHE PATENTSCHRIFT

(11) **EP 3 868 191 B1**
(45) Veröffentlichungstag und Bekanntmachung des Hinweises auf die Patenterteilung: **01.06.2022**
(21) Anmeldenummer: 21155029.8
(22) Anmeldetag: 03.02.2021
(51) Int. Cl.: A01B 61/04, A01C 7/20

(54) **LANDWIRTSCHAFTLICHE VORRICHTUNG MIT UNTERSCHIEDLICH ELASTISCHEN LAGERELEMENTEN**
AGRICULTURAL DEVICE WITH BEARING ELEMENTS WITH DIFFERENT ELASTICITY
DISPOSITIF AGRICOLE POURVU D ÉLÉMENTS PALIERS ÉLASTIQUES DIFFÉRENTS

(30) Priorität: 20.02.2020 DE 102020104451
(43) Veröffentlichungstag der Anmeldung: 25.08.2021
(73) Patentinhaber: Horsch Maschinen GmbH, 92421 Schwandorf (DE)
(72) Erfinder: Egelseer, Bastian, 92421 Schwandorf (DE)
(74) Vertreter: v. Bezold & Partner Patentanwälte - PartG mbB

(56) Entgegenhaltungen:
- DE-A1-102009 058 342
- DE-B3-102010 017 013
- DE-U1- 8 901 351
- DE-U1- 9 102 567

## Beschreibung

Die Erfindung betrifft eine landwirtschaftliche Vorrichtung, vorzugsweise eine Sä- und/oder Bodenbearbeitungsmaschine, mit einer Trägerkonstruktion und einer Vielzahl an zweckmäßig nebeneinander angeordneten Reiheneinheiten.

Landwirtschaftliche Reiheneinheiten, wie z. B. Säschare, werden üblicherweise an Trägerkonstruktionen landwirtschaftlicher Bodenbearbeitungs- und/oder Sämaschinen gelagert (aufgehängt). Die Lagerung erfolgt meist so, dass die Reiheneinheiten zum einen beim Überfahren von Hindernissen (z.B. Steinen) durch ein Verschwenken nach oben ausweichen können und zum anderen entlang der Ackerfläche mit einer definierten Vorspann-/Anpresskraft zur Einhaltung einer definierten Arbeitstiefe bewegt werden können. Darüber hinaus ist die Lagerung meist ausgeführt, so dass sie z. B. auch hochfrequente Schwing- und Stoßbewegungen zumindest weitgehend absorbieren kann.

Eine übliche Lagerung in Form einer sogenannten Gummischnurlagerung ist z. B. in der DE 10 2009 058 342 A1 offenbart. Die einzelnen Reiheneinheiten werden hierbei mit baugleichen Gummischnurlagerungen ausgestattet. Oftmals ist es erwünscht, die Reiheneinheiten in Fahrtrichtung und/oder in deren Längsrichtung versetzt zueinander anzuordnen, so dass im gegenseitigen Wechsel einige Reiheneinheiten weit und einige Reiheneinheiten kurz von deren Trägerkonstruktion abstehen. Das hat aber zur Folge, dass die unterschiedlich weit abstehenden Reiheneinheiten unterschiedliche Auflagekräften und/oder Arbeitstiefen aufweisen.

Das Dokument DE 89 01 351 U offenbart eine landwirtschaftliche Vorrichtung nach dem Oberbegriff des Anspruchs 1.

Eine Aufgabe der Erfindung ist es, eine verbesserte und/oder alternative landwirtschaftliche Vorrichtung zu schaffen, insbesondere eine landwirtschaftliche Vorrichtung, mit der trotz unterschiedlich positionierter Reiheneinheiten im Wesentlichen gleiche Auflagekräfte (insbesondere Vorspannkräfte) und/oder Arbeitstiefen ermöglicht werden können.

Diese Aufgabe kann mit den Merkmalen des Hauptanspruchs gelöst werden. Vorteilhafte Weiterbildungen der Erfindung sind in den Unteransprüchen und der folgenden Beschreibung bevorzugter Ausführungsformen der Erfindung offenbart.

Die Erfindung betrifft eine landwirtschaftliche Vorrichtung, vorzugsweise eine Sä- und/oder Bodenbearbeitungsmaschine, z. B. eine Scheibenegge, ein Grubber, eine Einzelkornsaat-Sämaschine, eine Drillsaat-Sämaschine etc.

Die landwirtschaftliche Vorrichtung umfasst eine Trägerkonstruktion, z. B. eine Scharschiene.

Die landwirtschaftliche Vorrichtung umfasst eine erste Gruppe an Reiheneinheiten, wobei die Reiheneinheiten der ersten Gruppe mittels elastischen Verbindungselementen mit der Trägerkonstruktion verbunden sind (vorzugsweise daran anmontiert sind, zweckmäßig direkt oder indirekt), und eine zweite Gruppe an Reiheneinheiten, wobei die Reiheneinheiten der zweiten Gruppe mittels elastischen Verbindungselementen mit der Trägerkonstruktion verbunden sind (vorzugsweise daran anmontiert sind, zweckmäßig direkt oder indirekt). Die Verbindungselemente der ersten Gruppe und die Verbindungselemente der zweiten Gruppe sind als Blattfederelemente ausgebildet.

Die landwirtschaftliche Vorrichtung zeichnet sich insbesondere dadurch aus, dass die Verbindungselemente der ersten Gruppe und die Verbindungselemente der zweiten Gruppe Elastizitäten (z. B. Steifigkeiten, Biegesteifigkeiten, Härten und/oder Federkennlinien) aufweisen. Dadurch können vorzugsweise Auflagekräfte (insbesondere Vorspannkräfte) und/oder Arbeitstiefen der Reiheneinheiten der ersten Gruppe und der zweiten Gruppe zweckmäßig im Wesentlichen aneinander angepasst werden, insbesondere im Wesentlichen aneinander angeglichen werden.

Es ist somit insbesondere möglich, dass die Blattfederelemente der ersten Gruppe einerseits und die Blattfederelemente der zweiten Gruppe andererseits unterschiedliche Elastizitäten (z. B. Steifigkeiten, Biegesteifigkeiten, Härten und/oder Federkennlinien) aufweisen, z. B. die Blattfederelemente der zweiten Gruppe steifer und/oder härter ausgebildet sind als die Blattfederelemente der ersten Gruppe.

Die Blattfederelemente der ersten Gruppe und/oder die Blattfederelemente der zweiten Gruppe bilden vorzugsweise Lagerelemente zur (insbesondere direkt oder indirekten) Lagerung, vorzugsweise Schwenklagerung, an der Trägerkonstruktion.

Es ist möglich, elastische Eigenschaften der Blattfederelemente gezielt anzupassen (z. B. an Geometrie, Hebellänge, Belastung etc.), um deren (Feder-) Steifigkeiten und/oder (Feder-) Kennlinien direkt zu beeinflussen, mit dem Vorteil, deren konstruktive Geometrie nicht zwingend verändern zu müssen.

Es ist möglich, dass die Blattfederelemente der zweiten Gruppe eine höhere Steifigkeit (z. B. Biegesteifigkeit) zur Verfügung stellen und/oder härter ausgebildet sind als die Blattfederelemente der ersten Gruppe.

Die Blattfederelemente der ersten Gruppe und/oder die Blattfederelemente der zweiten Gruppe können z.B. ein- oder mehrblättrig ausgebebildet sein, z. B. mit im Wesentlichen entlang ihrer Längsrichtung gleichbleibendem oder sich veränderndem Querschnitt, insbesondere sich kontinuierlich und/oder stufenförmig veränderndem Querschnitt.

Die Blattfederelemente der ersten Gruppe und der zweiten Gruppe können vorzugsweise in eine vorbestimmte Stellung vorspannbar sein, ermöglichen zugleich aber insbesondere eine Schwenklagerung (Aufhängung) der Reiheneinheiten. Hierdurch kann einerseits ein gewünschter Bodenanpressdruck und/oder eine gewünschte Arbeitstiefe realisiert werden, andererseits kann aber ein Verschwenken und somit ein Ausweichen der Bodenwerkzeuge oder allgemein der Reiheneinheiten beim Auffahren beispielsweise auf einen Stein ermöglicht werden.

Die Blattfederelemente der zweiten Gruppe können z. B. zumindest abschnittsweise breiter und/oder dicker (z. B. ein- oder mehrlagig) ausgebildet sein als die Blattfederelemente der ersten Gruppe, vorzugsweise zur Erzielung der unterschiedlichen Elastizitäten.

Die Blattfederelemente der ersten Gruppe und/oder der zweiten können z. B. eine über ihre Längserstreckung sich zumindest abschnittsweise kontinuierlich verändernde Materialbreite und/oder Materialdicke aufweisen. Allerdings sind auch Ausführungsformen mit im Wesentlichen gleichbleibender Materialbreite und/oder Materialdicke möglich.

Es ist möglich, dass die Blattfederelemente der zweiten Gruppe größere oder kleinere Bogen- oder Krümmungsgrößen (z. B. Radien) aufweisen als die Blattfederelemente der ersten Gruppe, vorzugsweise zur Erzielung der unterschiedlichen Elastizitäten.

Die Blattfederelemente der zweiten Gruppe und die Blattfederelemente der ersten Gruppe können z. B. aus unterschiedlichen Materialien oder unterschiedlichen Materialzusammensetzungen hergestellt sein, vorzugsweise zur Erzielung der unterschiedlichen Elastizitäten.

Es ist möglich, dass die Blattfederelemente der ersten Gruppe und/oder die Blattfederelemente der zweiten Gruppe aus einem metallischen Material, aus einem Kunststoffmaterial oder aus einem Verbundwerkstoff hergestellt sind.

Die Blattfederelemente der ersten Gruppe und/oder die Blattfederelemente der zweiten Gruppe können z. B. aus faserverstärktem (insbesondere langfaserverstärktem) Kunststoff ausgebildet sein.

Die Blattfederelemente der ersten Gruppe und/oder die Blattfederelemente der zweiten Gruppe können z. B. Kunststofflagen mit unterschiedlicher Matrixanordnung, z. B. unterschiedlicher Faserausrichtung, Faserdichte, Faserstärke etc., aufweisen, vorzugsweise zur Erzielung der unterschiedlichen Elastizitäten.

Es ist möglich, dass die Blattfederelemente der ersten Gruppe und die Blattfederelemente der zweiten Gruppe mit zumindest einem Hartmaterialeinsatz und/oder Hartmaterialaufsatz ausgestattet sind, vorzugsweise an Lager- und/oder Krafteinleitungsstellen. Der Hartmaterialeinsatz und/oder Hartmaterialaufsatz ist insbesondere härter als der ihn umgebende Kunststoff und z. B. aus metallischem Material.

Der Hartmaterialeinsatz und/oder der Hartmaterialaufsatz kann z. B. eine plattenförmige Auflagefläche, eine Lagerhülse und/oder Gewindehülse umfassen.

Der Hartmaterialeinsatz und/oder der Hartmaterialaufsatz kann z. B. gegenüber umgebendem Kunststoffmaterial erhaben ausgebildet sein, z. B. als Lager- und/oder Auflagefläche.

Es ist möglich, dass die Blattfederelemente der ersten Gruppe und der zweiten Gruppe ausgebildet sind, so dass sich darin ein zumindest nahezu linearer, kurvenförmiger oder degressiver Kraft-Weg-Verlauf einstellen kann, wenn die zugehörige Reiheneinheit der ersten Gruppe und/oder der zweiten Gruppe (z. B. beim Überfahren eines Hindernisses (z. B. eines Steines)) relativ zur Trägerkonstruktion nach oben verschwenkt wird. Um das zu ermöglichen, können die Elastizitätseigenschaften zweckmäßig angepasst werden (z. B. Anpassung von Form, Dicke, Breite, Matrixanordnung, Kunststofflagenaufbau, Faserdichte, Härte, Steifigkeit, Faserstärke, Faserausrichtung etc.).

Die Verbindungselemente der ersten Gruppe und die Verbindungselemente der zweiten Gruppe können z. B. einen lokal modifizierten Kunststofflagenaufbau und/oder eine lokal modifizierte Kunststoffmatrix aufweisen, vorzugsweise an Lager- und/oder Krafteinleitungsstellen. Dadurch können die Lager- und/oder Krafteinleitungsstellen vorteilhaft verstärkt werden.

Es ist möglich, dass die Reiheneinheiten der ersten Gruppe jeweils einen Tragarmkorpus (z. B. Scharkörper) aufweisen, an den die Blattfederelemente der ersten Gruppe mittels einer Befestigungseinrichtung anmontiert sind (z. B. angeschraubt) oder mit dem die Blattfederelemente der ersten Gruppe einstückig-integral ausgebildet sind.

Die Reiheneinheiten der zweiten Gruppe können vorzugsweise auch jeweils einen Tragarmkorpus (z. B. Scharkörper) aufweisen, an den die Blattfederelemente der zweiten Gruppe mittels einer Befestigungseinrichtung anmontiert sind (z. B. angeschraubt) oder mit dem die Blattfederelemente der zweiten Gruppe einstückig-integral ausgebildet sind.

Die Blattfederelemente der ersten Gruppe können z. B. als einstückig-integraler Teil der Tragarmkorpusse der ersten Gruppe ausgebildet sein.

Die Blattfederelemente der zweiten Gruppe können z. B. als einstückig-integraler Teil der Tragarmkorpusse der zweiten Gruppe ausgebildet sein.

Die Tragarmkorpusse der ersten Gruppe und/oder der zweiten Gruppe können z. B. aus metallischem Material, Kunststoffmaterial oder einem Verbundwerkstoff, vorzugsweise faserverstärktem Kunststoff, ausgebildet sein.

Es ist möglich, dass die Blattfederelemente der ersten Gruppe jeweils einen (z. B. sich im Wesentlichen geradlinig erstreckenden) ersten Teilabschnitt umfassen, welcher mit der Trägerkonstruktion verbunden ist (z. B. daran anmontiert ist), jeweils einen (z. B. sich im Wesentlichen geradlinig erstreckenden) zweiten Teilabschnitt umfassen, mit welchem die Tragarmkorpusse der ersten Gruppe verbunden sind (z. B. daran anmontiert oder damit einstückig-integral verbunden), und/oder jeweils einen (z. B. gekrümmten) dritten Teilabschnitt umfassen, welcher vorzugsweise sich zwischen dem ersten Teilabschnitt und dem zweiten Teilabschnitt der ersten Gruppe erstreckt.

Alternativ oder ergänzend können die Blattfederelemente der zweiten Gruppe jeweils einen (z. B. sich im Wesentlichen geradlinig erstreckenden) ersten Teilabschnitt umfassen, welcher mit der Trägerkonstruktion verbunden ist (z. B. daran anmontiert), jeweils einen (z. B. sich im Wesentlichen geradlinig erstreckenden) zweiten Teilabschnitt umfassen, mit welchem die Tragarmkorpusse der zweiten Gruppe verbunden sind (z. B. daran anmontiert oder damit einstückig-integral verbunden), und/oder jeweils einen (z. B gekrümmten) dritten Teilabschnitt umfassen, welcher vorzugsweise sich zwischen dem ersten Teilabschnitt und dem zweiten Teilabschnitt der zweiten Gruppe erstreckt.

Die Blattfederelemente der ersten Gruppe und/oder die Blattfederelemente zweiten Gruppe können z. B. als ein- oder mehrblättrige Blattfederelemente ausgebildet sein, z. B. aus Flachbandstahl- oder Flachbandkunststoff.

Die Blattfederelemente der ersten Gruppe und/oder die Blattfederelemente der zweiten Gruppe können z. B. einen um mehr als 180°, mehr als 225° oder mehr als 250° gekrümmten Teilabschnitt umfassen, vorzugsweise einen um im Wesentlichen 270° gekrümmten Teilabschnitt.

Die Blattfederelemente können im Kontext der Erfindung z. B. "Flachformfedern", "Flachfedern" und/oder "Spiralfedern" umfassen.

Die Reiheneinheiten der ersten Gruppe können z. B. weniger weit von der Trägerkonstruktion (insbesondere nach hinten) abstehen als die Reiheneinheiten der zweiten Gruppe. Alternativ oder ergänzend können die Reiheneinheiten der ersten Gruppe und die Reiheneinheiten der zweiten Gruppe entlang der Trägerkonstruktion im gegenseitigen Wechsel positioniert sein und/oder in deren Längsrichtung versetzt zueinander angeordnet sein.

Die Reiheneinheiten der ersten Gruppe können relativ zur Trägerkonstruktion z. B. eine kurze Hebellänge aufweisen, wobei die Reiheneinheiten der zweiten Gruppe relativ zur Trägerkonstruktion eine zweckmäßig lange Hebellänge aufweisen können.

Die Reiheneinheiten der ersten Gruppe können z. B. im Wesentlichen baugleich ausgeführt sein wie die Reiheneinheiten der zweiten Gruppe, vorzugsweise mit Ausnahme der Blattfederelemente und/oder deren Längserstreckung.

Die Reiheneinheiten der ersten Gruppe und die Reiheneinheiten der zweiten Gruppe können jeweils vorzugsweise zumindest eines von folgendem umfassen: ein Säschar, eine Saatgutleitung, ein Furchen-erzeugendes Werkzeug, z. B. Schneidscheibe oder Zinken, eine Saatgut-Andrück-Rolle (z. B. Walze) und/oder ein anderes Bodenbearbeitungsgerät. Letztgenannte Teile können vorzugsweise an den hierin offenbarten Tragarmkorpussen montiert sein.

Es ist möglich, dass die Blattfederelemente der ersten Gruppe und/oder die Blattfederelemente der zweiten Gruppe sich durch jeweils zumindest ein Halte- und/oder Anschlagelement erstrecken. Dadurch kann z. B. deren Bewegungsfreiheit nach unten und/oder im Wesentlichen in Längsrichtung der Trägerkonstruktion begrenzt werden. Hierfür kann ein Halte- und/oder Anschlagelement zum Einsatz kommen oder mehrere Halte- und/oder Anschlagelemente. Die Halte- und/oder Anschlagelemente können ebenfalls vorteilhaft als Ausrichthilfe genutzt werden.

Die Halte- und/oder Anschlagelemente können z. B. als vorzugsweise nach unten abstehende Bügel, Schellen oder Haken ausgeführt sein.

Die Trägerkonstruktion bildet vorzugsweise einen gemeinsamen Träger für die Reiheneinheiten der ersten Gruppe und die Reiheneinheiten der zweiten Gruppe, insbesondere zum Ziehen derselben.

Es ist möglich, dass die Trägerkonstruktion mitsamt den Reiheneinheiten der ersten Gruppe und der zweiten Gruppe verschwenkbar und/oder höhenverstellbar ausgeführt ist, vorzugsweise, um deren Auflagekräfte und/oder Arbeitstiefen zweckmäßig einheitlich verändern oder anpassen zu können. Das Verschwenken und/oder die Höhenverstellung (insbesondere relativ zu einer Rahmenkonstruktion der Sä- und/oder Bodenbearbeitungsmaschine) kann z. B. manuell durch eine Bedienperson erfolgen oder mittels eines automatisierten Schwenk- und/oder Höhenverstellungssystems.

Es ist möglich, dass die Blattfederelemente der ersten Gruppe und die Blattfederelemente der zweiten Gruppe zur (zweckmäßig direkten oder indirekten) Montage an die Trägerkonstruktion ausgebildet sind und eine elastische Schwenklagerung relativ zur Trägerkonstruktion ermöglichen, so dass die Reiheneinheiten zweckmäßig um die Trägerkonstruktion nach oben und unten verschwenken können.

Die Reiheneinheiten können z. B. als Säschar, insbesondere als Scheibenschar ausgebildet sein (z.B. Einscheibenschar und/oder Doppelscheibenschar).

Zu erwähnen ist noch, dass die Hauptbereiche der Tragarmkorpusse zur Montage der Furchen-erzeugende Werkzeuge und/oder der Saatgut-Andrück-Rollen und/oder der Saatgutleitungen zweckmäßig steifer ausgebildet sind als die Blattfederelemente der ersten Gruppe und der zweiten Gruppe.

Zu erwähnen ist des Weiteren, dass der jeweilige Tragarmkorpus, insbesondere das Säschar, aus z. B. zwei miteinander vergossenen, miteinander verschmelzten und/oder miteinander verbundenen Tragarmteilstrukturen hergestellt sein kann, wobei zweckmäßig einer der Tragarmteilstrukturen das elastische Verbindungselement (z. B. das Blattfederelemente) umfassen kann.

Da die Hauptbereiche insbesondere eine Trag- und Montagefunktion aufweisen, können sie vorzugsweise im Wesentlichen starr ausgebildet sein.

Als Fertigungsverfahren für die Blattfederelemente oder allgemein der aus Kunststoff, insbesondere faserverstärktem Kunststoff hergestellten Teile kommen z. B. in Betracht: Prepreg-, Autoklav-, Vulkanisations- und/oder Vakuuminfusionsverfahren, Handlaminat, Resign Transfer Molding etc. Allerdings sind auch z. B. Spritzguss-, Spritzpress- oder Strangzieh-Verfahren möglich, ebenso z. B. SMC-Verfahren (Sheet Molding Compounds).

Die zuvor beschriebenen bevorzugten Ausführungsbeispiele und Merkmale der Erfindung sind zweckmäßig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine perspektivische Ansicht einer landwirtschaftlichen Vorrichtung mit einer Vielzahl an Reiheneinheiten,
- Figur 2: zeigt einen vergrößerten Teilbereich der Figur 1,
- Figur 3: zeigt eine Draufsicht auf die Vorrichtung der Figuren 1 und 2,
- Figur 4: zeigt eine Draufsicht auf zwei Reiheneinheiten,
- Figur 5: zeigt eine perspektivische Ansicht einer Reiheneinheit,
- Figur 6: zeigt eine Seitenansicht auf zwei Reiheneinheiten,
- Figur 7: zeigt eine perspektivische Ansicht einer Sä- und/oder Bodenbearbeitungsmaschine,
- Figur 8: zeigt eine perspektivische Ansicht eines Tragarmkorpus für eine Reiheneinheit, und
- Figur 9: zeigt eine Seitenansicht des Tragarmkorpus der Figur 8.

Die in den Figuren beschriebenen bevorzugten Ausführungsbeispiele der Erfindung stimmen teilweise überein, wobei für ähnliche oder identische Teile die gleichen Bezugszeichen verwendet werden und zu deren Erläuterung auch auf die Beschreibung der anderen Ausführungsbeispiele verwiesen werden kann.

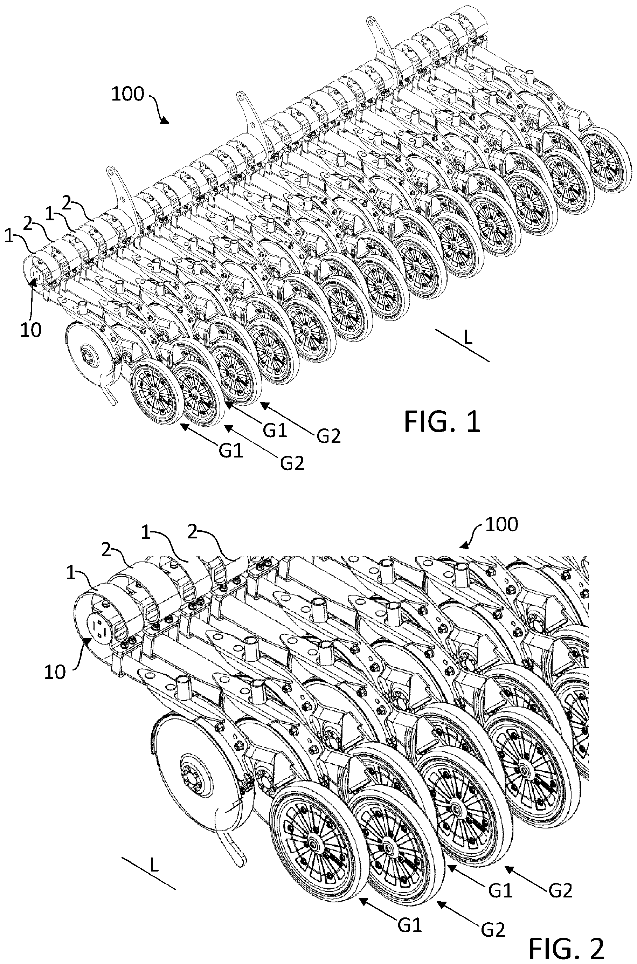

Die Figuren 1 bis 6 zeigen unterschiedliche Ansichten einer landwirtschaftlichen Vorrichtung 100 oder Teilen davon gemäß einem Ausführungsbeispiel der Erfindung. Die Vorrichtung 100 wird nachfolgend unter Bezugnahme auf die Figuren 1 bis 6 beschrieben.

Die Vorrichtung 100 umfasst eine Trägerkonstruktion 10 und eine Vielzahl an Reiheneinheiten. Die Reiheneinheiten sind als Säschare mit z. B. Furchen-erzeugenden Werkzeugen, Saatgut-Andrück-Rollen (z. B. Walzen), Sattgutleitungen etc. ausgebildet.

Die Vorrichtung 100 umfasst eine erste Gruppe G1 an Reiheneinheiten, wobei die Reiheneinheiten der ersten Gruppe G1 mittels elastischen Verbindungselementen 1 mit der Trägerkonstruktion 10 verbunden sind, insbesondere an die Trägerkonstruktion 10 anmontiert sind. Des Weiteren umfasst die Vorrichtung 100 eine zweite Gruppe G2 an Reiheneinheiten, wobei die Reiheneinheiten der zweiten Gruppe G2 mittels elastischen Verbindungselementen 2 mit der Trägerkonstruktion 10 verbunden sind, insbesondere an die Trägerkonstruktion 10 anmontiert sind.

Der Übersichtlichkeit halber sind in den Figuren 1 bis 6 nicht alle Teile mit Bezugszeichen versehen.

Die Reiheneinheiten der ersten Gruppe G1 und die Reiheneinheiten der zweiten Gruppe G2 sind entlang der Trägerkonstruktion 10 im gegenseitigen Wechsel angeordnet und in deren Längsrichtung L versetzt zueinander angeordnet. Die Reiheneinheiten der ersten Gruppe G1 stehen hierbei weniger weit von der Trägerkonstruktion 10 ab als die Reiheneinheiten der zweiten Gruppe G2 und haben deshalb eine kürzere Hebellänge. Die Reiheneinheiten der ersten Gruppe G1 sind vorzugsweise kürzer als die Reiheneinheiten der zweiten Gruppe G2. Die Trägerkonstruktion 10 bildet einen gemeinsamen Träger für die Reiheneinheiten der ersten Gruppe G1 und der zweiten Gruppe G2.

Das Versetzen in Längsrichtung L dient in der Regel dazu, Verstopfungen zu vermeiden.

Eine Besonderheit ist, dass die Verbindungselemente 1 der ersten Gruppe G1 und die Verbindungselemente 2 der zweiten Gruppe G2 als Blattfederelemente ausgebildet sind und unterschiedliche Elastizitäten (insbesondere unterschiedliche Federsteifigkeiten und/oder Federkennlinien) aufweisen. Dadurch können trotz unterschiedlicher Länge der Reiheinheiten der ersten Gruppe G1 und der zweiten Gruppe G2 deren Auflagekräfte (insbesondere Vorspannkräfte) und/oder Arbeitstiefen aneinander angepasst werden, insbesondere im Wesentlichen aneinander angeglichen werden.

Die Blattfederelemente 1 und die Blattfederelemente 2 ermöglichen insbesondere vordefinierbare und insbesondere aneinander anpassbare Auflagekräfte (z.B. Schardrücke) und/oder Arbeitstiefen und zwar trotz des Versatzes in Längsrichtung L.

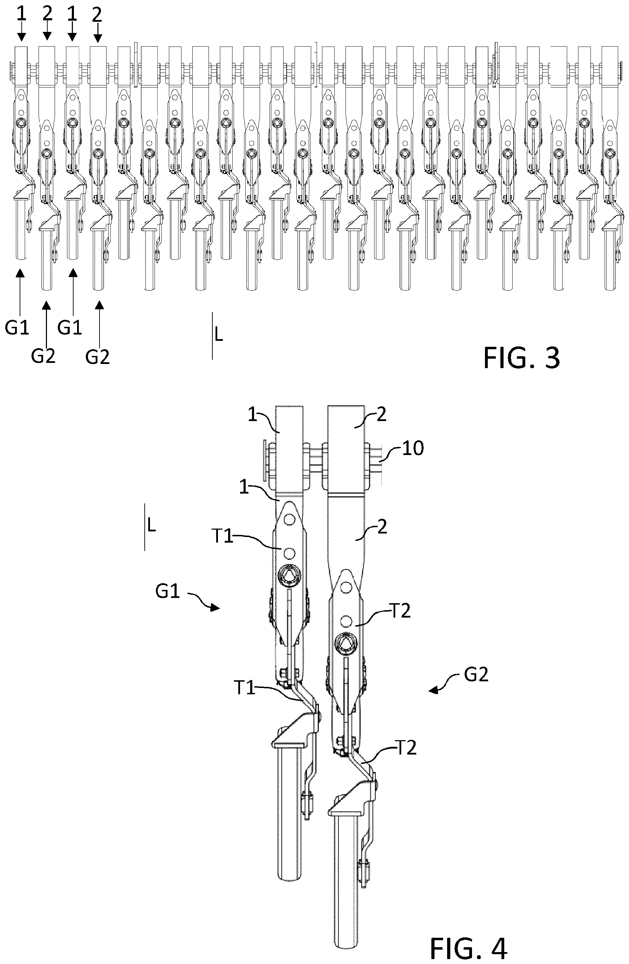

Figur 4 zeigt z. B., dass die Blattfederelemente 2 der zweiten Gruppe G2 länger, aber auch breiter und somit steifer ausgebildet sind als die Blattfederelemente 1 der ersten Gruppe G1.

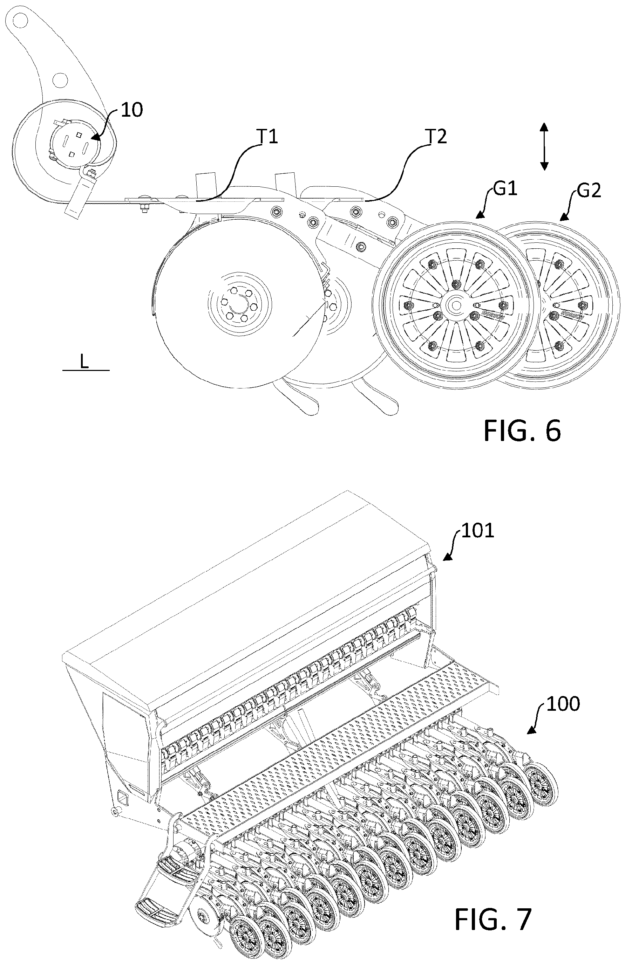

Die Blattfederelemente 1 und die Blattfederelemente 2 ermöglichen eine elastische Schwenklagerung relativ zur Trägerkonstruktion 10, so dass die Reiheneinheiten der ersten Gruppe G1 und der zweiten Gruppe G2 beim Überfahren eines Hindernisses (z. B. eines Steins oder Erdhaufens) nach oben und daraufhin wieder nach unten verschwenken können, was in Figur 6 durch den Doppelpfeil schematisch angedeutet ist. Durch das nach oben Verschwenken wird zugleich eine Rückstellkraft erzeugt.

In dem in den Figuren 1 bis 6 gezeigten Ausführungsbeispiel umfassen sowohl die Blattfederelemente 1 der ersten Gruppe G1 als auch die Blattfederelemente 2 der zweiten Gruppe gekrümmte Teilabschnitte.

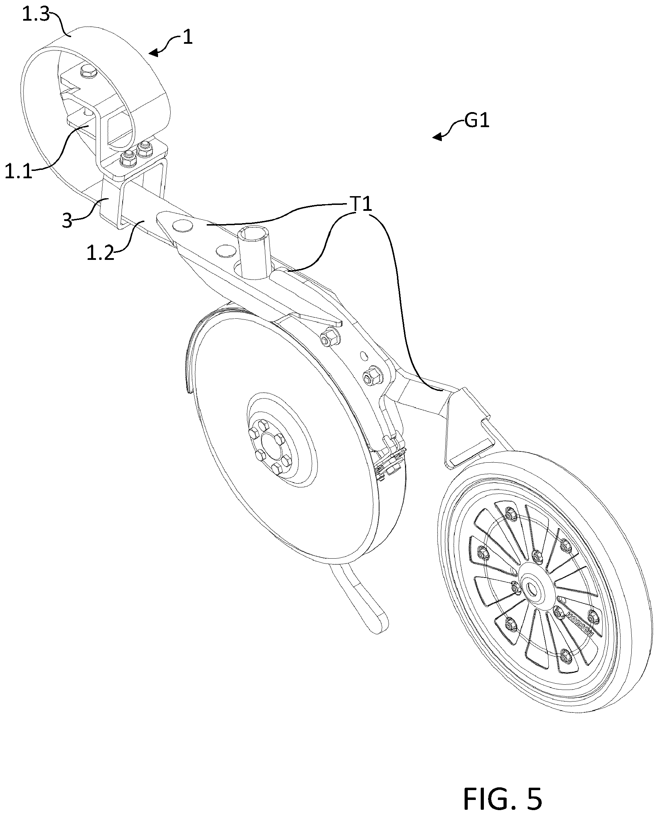

Figur 5 zeigt beispielhaft eine Reiheneinheit der ersten Gruppe G1, wobei die Reiheneinheiten der zweiten Gruppe G2 mit Ausnahme der Blattfederelemente 2 im Wesentlichen baugleich ausgeführt sein können.

Die Reiheinheit umfasst einen Tragarmkorpus T1 zur Montage des Furchen-erzeugenden Werkzeugs, der Saatgut-Andrück-Rolle (z. B. Walzen), der Sattgutleitung etc.

Der Tragarmkorpus T1 mit den Trag- und Montagefunktionen ist zweckmäßig natürlich steifer ausgebildet als das Blattfederelement 1.

Das Blattfederelement 1 umfasst einen (sich z. B. im Wesentlichen geradlinig erstreckenden) ersten Teilabschnitt 1.1, welcher an die Trägerkonstruktion 10 montierbar ist. Das Blattfederelement 1 umfasst einen (sich z. B. im Wesentlichen geradlinig erstreckenden) zweiten Teilabschnitt 1.2, an welchem der Tragarmkorpus T1 mittels einer Befestigungseinrichtung (z. B. einer Schraubverbindung) anmontiert ist. Das Blattfederelement 1 umfasst einen gekrümmten Teilabschnitt 1.3, welcher sich zwischen dem ersten Teilabschnitt 1.1 und dem zweiten Teilabschnitt 1.2 erstreckt. Der gekrümmte Teilabschnitt 1.3 kann z. B. um mehr als 180°, mehr als 225° oder mehr als 250° gekrümmt sein, vorzugsweise um im Wesentlichen 270°.

Das Blattfederelement 1 kann sich z. B. durch ein Halte- oder Anschlagelement 3 hindurch erstrecken. Das Halte- oder Anschlagelement 3 kann die Bewegungsfreiheit insbesondere des zweiten Teilabschnitts 1.2 nach unten und im Wesentlichen in Längsrichtung der Trägerkonstruktion 10 begrenzen und z. B. auch als Ausrichthilfe dienen.

Vorzugsweise sind alle Reiheneinheiten und/oder Blattfederelemente 1 der ersten Gruppe G1 wie vorstehend beschrieben ausgebildet.

Mit Ausnahme der Blattfederelemente 2 können zweckmäßig alle Reiheneinheiten der zweiten Gruppe G2 im Wesentlichen baugleich zu den Reiheneinheiten der ersten Gruppe G1 ausgeführt sein.

Die Blattfederelemente 2 sind insbesondere länger und steifer (z. B. breiter und/oder dicker) als die Blattfederelemente 1.

Zur Erhöhung der Steifigkeit können die Blattfederelemente 2 z. B. insgesamt oder nur bereichsweise breiter und/oder dicker ausgeführt sein als die Blattfederelemente 1. Ebenfalls kann z. B. der Krümmungsradius des dritten Teilabschnitts 1.3 z B. vergrößert oder verkleinert sein, um die Elastizität wunschgemäß anzupassen.

Figur 7 zeigt eine Sä- und/oder Bodenbearbeitungsmaschine mit einer Vorrichtung 100. Ein Saatgutbehälter 101 ist zur Verfügung gestellt, um die Reiheneinheiten der ersten Gruppe G1 und der zweiten Gruppe G2 mit Saatgut zu versorgen. Der Saatgutbehälter 101 kann mit z. B. integrierten Dosiereinrichtungen ausgestattet sein, wobei jeder Reiheneinheit eine eigene Dosiereinrichtung zugeordnet sein kann.

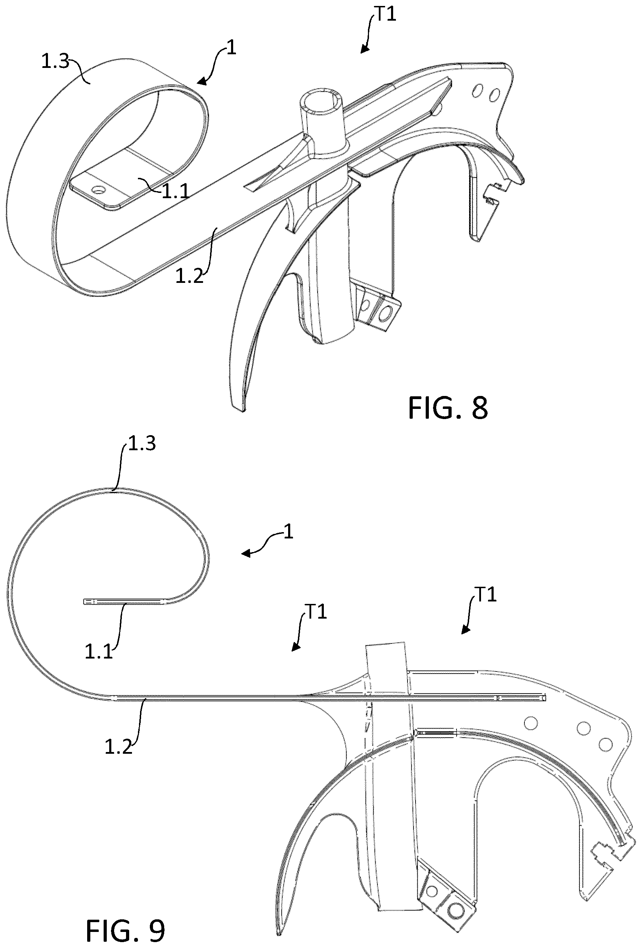

Die Figuren 8 und 9 zeigen unterschiedliche Ansichten eines Tragarmkorpus T1 mit insbesondere einstück-integral verbundenem Blattfederelement 1.

Eine Besonderheit ist, dass das Blattfederelement 1 nicht an den Tragarmkorpus T1 mittels einer Befestigungseinrichtung anmontiert ist, sondern einstückig-integral mit dem Tragarmkorpus T1 verbunden ist. Das Blattfederelement 1 und der Tragarmkorpus T1 sind zweckmäßig aus faserverstärktem Kunststoff ausgebildet.

Der Hauptbereich des Tragarmkorpus T1 mit der Trag- und Montagefunktion für insbesondere das Furchen-erzeugende Werkzeug und/oder die Saatgut-Andrück-Rolle und/oder die Saatgutleitung ist natürlich zweckmäßig steifer ausgebildet als das Blattfederelement 1, insbesondere im Wesentlichen starr ausgebildet.

Die Tragarmkorpusse T2 können ähnlich wie der zuvor beschriebene Tragarmkorpus T1 ausgebildet sein, also insbesondere mit einstück-integral verbundenen Blattfederelementen 2, allerdings in deren Längsrichtung L länger als der Tragarmkorpus T1. Die für die zweite Gruppe G2 verwendeten Blattfederelemente 2 können allerdings zweckmäßig steifer ausgebildet sein als die Blattfederelemente 1 der ersten Gruppe G1.

Die unter Bezugnahme auf die Figuren 1 bis 9 gezeigten Blattfederelemente 1 und 2 bilden vorzugsweise Lagerelemente zur zweckmäßig direkten oder indirekten Lagerung an der Trägerkonstruktion 10 und zwar insbesondere zur Bildung elastischer Schwenklagerungen.

Die Erfindung ist nicht auf die oben beschriebenen bevorzugten Ausführungsbeispiele beschränkt.

### Bezugszeichenliste

- 1: Verbindungselement, vorzugsweise Blattfederelement
- 1.1: erster Teilabschnitt
- 1.2: zweiter Teilabschnitt
- 1.3: dritter Teilabschnitt, insbesondere gekrümmter Teilabschnitt
- T1: Tragarmkorpus
- G1: erste Gruppe

- 2: Verbindungselement, vorzugsweise Blattfederelement
- T2: Tragarmkorpus
- G2: zweite Gruppe

- 3: Halte- und/oder Anschlagelement

- 10: Trägerkonstruktion, vorzugsweise Scharschiene

- 100: Landwirtschaftliche Vorrichtung
- 101: Saatgutbehälter

- L: Längsrichtung der Reiheneinheiten, vorzugsweise der Tragarmkorpusse

## Patentansprüche

1. Landwirtschaftliche Vorrichtung (100), vorzugsweise Sä- und/oder Bodenbearbeitungsmaschine, mit
- einer Trägerkonstruktion (10),
- einer ersten Gruppe (G1) an Reiheneinheiten, wobei die Reiheneinheiten der ersten Gruppe (G1) mittels elastischen Verbindungselementen (1) mit der Trägerkonstruktion (10) verbunden sind, und
- einer zweiten Gruppe (G2) an Reiheneinheiten, wobei die Reiheneinheiten der zweiten Gruppe (G2) mittels elastischen Verbindungselementen (2) mit der Trägerkonstruktion (10) verbunden sind, wobei
- die Verbindungselemente (1) der ersten Gruppe (G1) und die Verbindungselemente (2) der zweiten Gruppe (G2) als Blattfederelemente (1, 2) ausgebildet sind, **dadurch gekennzeichnet, dass** die Verbindungselemente (1) der ersten Gruppe (G1) und die Verbindungselemente (2) der zweiten Gruppe (G2) unterschiedliche Elastizitäten aufweisen, vorzugsweise wodurch Auflagekräfte und/oder Arbeitstiefen der Reiheneinheiten der ersten Gruppe (G1) und der zweiten Gruppe (G2) aneinander anpassbar sind.

2. Landwirtschaftliche Vorrichtung (100) nach Anspruch 1, **dadurch gekennzeichnet, dass** die Blattfederelemente (2) der zweiten Gruppe (G2) eine höhere Steifigkeit zur Verfügung stellen und/oder härter ausgebildet sind als die Blattfederelemente (1) der ersten Gruppe (G1).

3. Landwirtschaftliche Vorrichtung (100) nach einem der vorhergehenden Ansprüche, **dadurch gekennzeichnet, dass** die Blattfederelemente (2) der zweiten Gruppe (G2) breiter und/oder dicker sind als die Blattfederelemente (2) der ersten Gruppe (G1), vorzugsweise zur Erzielung der unterschiedlichen Elastizitäten.

4. Landwirtschaftliche Vorrichtung (100) nach einem der vorhergehenden Ansprüche, **dadurch gekennzeichnet, dass** die Blattfederelemente (2) der zweiten Gruppe (G2) größere oder kleinere Bogen- oder Krümmungsgrößen aufweisen als die Blattfederelemente (1) der ersten Gruppe (G1), vorzugsweise zur Erzielung der unterschiedlichen Elastizitäten.

5. Landwirtschaftliche Vorrichtung (100) nach einem der vorhergehenden Ansprüche, **dadurch gekennzeichnet, dass** die Blattfederelemente (2) der zweiten Gruppe (G2) und die Blattfederelemente (1) der ersten Gruppe (G1) aus unterschiedlichen Materialien oder unterschiedlichen Materialzusammensetzungen hergestellt sind, vorzugsweise zur Erzielung der unterschiedlichen Elastizitäten.

6. Landwirtschaftliche Vorrichtung (100) nach einem der vorhergehenden Ansprüche, **dadurch gekennzeichnet, dass** die Blattfederelemente (1) der ersten Gruppe (G1) und/oder die Blattfederelemente (2) der zweiten Gruppe (G2) aus einem metallischen Material, aus einem Kunststoffmaterial oder aus einem Verbundwerkstoff ausgebildet sind.

7. Landwirtschaftliche Vorrichtung (100) nach einem der vorhergehenden Ansprüche, **dadurch gekennzeichnet, dass** die Blattfederelemente (1) der ersten Gruppe (G1) und die Blattfederelemente (2) der zweiten Gruppe (G2) ausgebildet sind, so dass sich darin ein zumindest nahezu linearer, kurvenförmiger oder degressiver Kraft-Weg-Verlauf einstellt, wenn die zugehörige Reiheneinheit der ersten Gruppe (G1) und/oder die zugehörige Reiheneinheit der zweiten Gruppe (G2) relativ zur Trägerkonstruktion (10) nach oben verschwenkt wird.

8. Landwirtschaftliche Vorrichtung (100) nach einem der vorhergehenden Ansprüche, **dadurch gekennzeichnet, dass**
- die Reiheneinheiten der ersten Gruppe (G1) jeweils einen Tragarmkorpus (T1) aufweisen, an den die Blattfederelemente (1) der ersten Gruppe (G1) mittels einer Befestigungseinrichtung anmontiert sind oder mit dem die Blattfederelemente (1) der ersten Gruppe (G1) einstückig-integral ausgebildet sind, und/oder
- die Reiheneinheiten der zweiten Gruppe (G2) jeweils einen Tragarmkorpus (T2) aufweisen, an den die Blattfederelemente (2) der zweiten Gruppe (G2) mittels einer Befestigungseinrichtung anmontiert sind oder mit dem die Blattfederelemente (2) der zweiten Gruppe (G2) einstückig-integral ausgebildet sind.

9. Landwirtschaftliche Vorrichtung (100) nach Anspruch 7 oder 8, **dadurch gekennzeichnet, dass** die Tragarmkorpusse (T1) der ersten Gruppe (G1) und/oder die Tragarmkorpusse (T2) der zweiten Gruppe (2) aus metallischem Material, Kunststoffmaterial oder einem Verbundwerkstoff, vorzugsweise faserverstärktem Kunststoff, ausgebildet sind.

10. Landwirtschaftliche Vorrichtung (100) nach einem der vorhergehenden Ansprüche, **dadurch gekennzeichnet, dass** die Blattfederelemente (1) der ersten Gruppe (G1) und die Blattfederelemente (2) der zweiten Gruppe (G2) einen um mehr als 180°, mehr als 225° oder mehr als 250° gekrümmten Teilabschnitt (1.3) umfassen.

11. Landwirtschaftliche Vorrichtung (100) nach einem der vorhergehenden Ansprüche, **dadurch gekennzeichnet, dass**
- die Reiheneinheiten der ersten Gruppe (G1) weniger weit von der Trägerkonstruktion (10) abstehen als die Reiheneinheiten der zweiten Gruppe (G2), und/oder
- die Reiheneinheiten der ersten Gruppe (G1) und die Reiheneinheiten der zweiten Gruppe (G2) entlang der Trägerkonstruktion (10) im gegenseitigen Wechsel positioniert und in deren Längsrichtung (L) versetzt zueinander angeordnet sind.

12. Landwirtschaftliche Vorrichtung (100) nach einem der vorhergehenden Ansprüche, **dadurch gekennzeichnet, dass** die Reiheneinheiten der ersten Gruppe (G1) mit Ausnahme der Blattfederelemente (1) und/oder deren Längserstreckung baugleich ausgeführt sind wie die Reiheneinheiten der zweiten Gruppe (G2).

13. Landwirtschaftliche Vorrichtung (100) nach einem der vorhergehenden Ansprüche, **dadurch gekennzeichnet, dass** die Blattfederelemente (1) der ersten Gruppe (G1) und/oder die Blattfederelemente (2) der zweiten Gruppe (G2) sich durch jeweils zumindest ein Halte- und/oder Anschlagelement (3) erstrecken, um deren Bewegungsfreiheit nach unten und/oder in Längsrichtung der Trägerkonstruktion (10) zu begrenzen.

14. Landwirtschaftliche Vorrichtung (100) nach Anspruch 13, **dadurch gekennzeichnet, dass** die Halte- und/oder Anschlagelemente (3) als Bügel, Schellen oder Haken ausgeführt sind.

15. Landwirtschaftliche Vorrichtung (100) nach einem der vorhergehenden Ansprüche, **dadurch gekennzeichnet, dass** die Trägerkonstruktion (10) einen gemeinsamen Träger für die Reiheneinheiten der ersten Gruppe (G1) und die Reiheneinheiten der zweiten Gruppe (G2) bildet.

16. Landwirtschaftliche Vorrichtung (100) nach einem der vorhergehenden Ansprüche, **dadurch gekennzeichnet, dass** die Trägerkonstruktion (10) mitsamt den Reiheneinheiten der ersten Gruppe (G1) und der zweiten Gruppe (G2) verschwenkbar und/oder höhenverstellbar ausgeführt ist.

17. Landwirtschaftliche Vorrichtung (100) nach einem der vorhergehenden Ansprüche, **dadurch gekennzeichnet, dass** die Blattfederelemente (1) der ersten Gruppe (G1) und die Blattfederelemente (2) der zweiten Gruppe (G2) zur Montage an die Trägerkonstruktion (10) ausgebildet sind und eine elastische Schwenklagerung relativ zur Trägerkonstruktion (10) ermöglichen.

## Claims

1. Agricultural device (100), preferably a sowing machine and/or a soil working machine, comprising
- a supporting structure (10),
- a first group (G1) of row units, the row units of the first group (G1) being connected to the supporting structure (10) by means of elastic connection elements (1), and
- a second group (G2) of row units, the row units of the second group (G2) being connected to the supporting structure (10) by means of elastic connection elements (2),
- the connection elements (1) of the first group (G1) and the connection elements (2) of the second group (G2) being designed as leaf-spring elements (1, 2), **characterised in that** the connection elements (1) of the first group (G1) and the connection elements (2) of the second group (G2) have different levels of elasticity, preferably whereby contact forces and/or working depths of the row units of the first group (G1) and the second group (G2) can be adjusted to one another.

2. Agricultural device (100) according to claim 1, **characterised in that** the leaf-spring elements (2) of the second group (G2) provide greater rigidity and/or are harder than the leaf-spring elements (1) of the first group (G1).

3. Agricultural device (100) according to any of the preceding claims, **characterised in that** the leaf-spring elements (2) of the second group (G2) are wider and/or thicker than the leaf-spring elements (2) of the first group (G1), preferably to achieve the different levels of elasticity.

4. Agricultural device (100) according to any of the preceding claims, **characterised in that** the leaf-spring elements (2) of the second group (G2) have larger or smaller arc sizes or curvatures than the leaf-spring elements (1) of the first group (G1), preferably to achieve the different levels of elasticity.

5. Agricultural device (100) according to any of the preceding claims, **characterised in that** the leaf-spring elements (2) of the second group (G2) and the leaf-spring elements (1) of the first group (G1) are made of different materials or different material compositions, preferably to achieve the different levels of elasticity.

6. Agricultural device (100) according to any of the preceding claims, **characterised in that** the leaf-spring elements (1) of the first group (G1) and/or the leaf-spring elements (2) of the second group (G2) are made of a metal material, a plastics material or a composite material.

7. Agricultural device (100) according to any of the preceding claims, **characterised in that** the leaf-spring elements (1) of the first group (G1) and the leaf-spring elements (2) of the second group (G2) are designed such that an at least approximately linear, curved or degressive force-displacement movement is produced therein when the associated row unit of the first group (G1) and/or the associated row unit of the second group (G2) is pivoted upwards relative to the supporting structure (10).

8. Agricultural device (100) according to any of the preceding claims, **characterised in that**
- the row units of the first group (G1) each comprise a support-arm body (T1), on which the leaf-spring elements (1) of the first group (G1) are mounted by means of a fastening apparatus or together with which the leaf-spring elements (1) of the first group (G1) are formed integrally in one piece, and/or
- the row units of the second group (G2) each comprise a support-arm body (T2), on which the leaf-spring elements (2) of the second group (G2) are mounted by means of a fastening apparatus or together with which the leaf-spring elements (2) of the second group (G2) are formed integrally in one piece.

9. Agricultural device (100) according to claim 7 or 8, **characterised in that** the support-arm bodies (T1) of the first group (G1) and/or the support-arm bodies (T2) of the second group (2) are made of metal material, plastics material or a composite material, preferably fibre-reinforced plastics material.

10. Agricultural device (100) according to any of the preceding claims, **characterised in that** the leaf-spring elements (1) of the first group (G1) and the leaf-spring elements (2) of the second group (G2) comprise a sub-portion (1.3) that is curved by greater than 180°, greater than 225° or greater than 250°.

11. Agricultural device (100) according to any of the preceding claims, **characterised in that**
- the row units of the first group (G1) project from the supporting structure (10) to a lesser extent than the row units of the second group (G2), and/or
- the row units of the first group (G1) and the row units of the second group (G2) are alternately positioned along the supporting structure (10) and are arranged to be offset from one another in the longitudinal direction (L) thereof.

12. Agricultural device (100) according to any of the preceding claims, **characterised in that** the row units of the first group (G1), with the exception of the leaf-spring elements (1) and/or the longitudinal extension thereof, are identical in construction to the row units of the second group (G2).

13. Agricultural device (100) according to any of the preceding claims, **characterised in that** the leaf-spring elements (1) of the first group (G1) and/or the leaf-spring elements (2) of the second group (G2) each extend through at least one retaining and/or stop element (3), in order to limit their freedom of motion downwards and/or in the longitudinal direction of the supporting structure (10).

14. Agricultural device (100) according to claim 13, **characterised in that** the retaining and/or stop elements (3) are constructed as brackets, clamps or hooks.

15. Agricultural device (100) according to any of the preceding claims, **characterised in that** the supporting structure (10) forms a common support for the row units of the first group (G1) and the row units of the second group (G2).

16. Agricultural device (100) according to any of the preceding claims, **characterised in that** the supporting structure (10) is constructed to be pivotable and/or height-adjustable together with the row units of the first group (G1) and the second group (G2).

17. Agricultural device (100) according to any of the preceding claims, **characterised in that** the leaf-spring elements (1) of the first group (G1) and the leaf-spring elements (2) of the second group (G2) are designed for being mounted on the supporting structure (10) and allow for elastic pivotable mounting relative to the supporting structure (10).

## Revendications

1. Dispositif agricole (100), de préférence machine d'ensemencement et/ou de travail du sol, avec
- une structure porteuse (10),
- un premier groupe (G1) d'unités de rangée, dans lequel les unités de rangée du premier groupe (G1) sont reliées à la structure porteuse (10) au moyen d'éléments de liaison (1) élastiques, et
- un deuxième groupe (G2) sur des unités de rangée, dans lequel les unités de rangée du deuxième groupe (G2) sont reliées à la structure porteuse (10) au moyen d'éléments de liaison (2) élastiques, dans lequel
- les éléments de liaison (1) du premier groupe (G1) et les éléments de liaison (2) du deuxième groupe (G2) sont réalisés en tant qu'éléments de ressort à lames (1, 2), **caractérisé en ce que** les éléments de liaison (1) du premier groupe (G1) et les éléments de liaison (2) du deuxième groupe (G2) présentent des élasticités différentes, de préférence ce qui a pour effet que des forces appliquées et/ou des profondeurs de travail des unités de rangée du premier groupe (G1) et du deuxième groupe (G2) peuvent être adaptées les unes aux autres.

2. Dispositif agricole (100) selon la revendication 1, **caractérisé en ce que** les éléments de ressort à lames (2) du deuxième groupe (G2) fournissent une rigidité plus élevée et/ou sont réalisés avec une plus grande dureté que les éléments de ressort à lames (1) du premier groupe (G1).

3. Dispositif agricole (100) selon l'une quelconque des revendications précédentes, **caractérisé en ce que** les éléments de ressort à lames (2) du deuxième groupe (G2) sont plus larges et/ou plus épais que les éléments de ressort à lames (2) du premier groupe (G1), de préférence pour obtenir les différentes élasticités.

4. Dispositif agricole (100) selon l'une quelconque des revendications précédentes, **caractérisé en ce que** les éléments de ressort à lames (2) du deuxième groupe (G2) présentent des grandeurs de cintrage ou d'incurvation supérieures ou inférieures aux éléments de ressort à lames (1) du premier groupe (G1), de préférence pour obtenir les différentes élasticités.

5. Dispositif agricole (100) selon l'une quelconque des revendications précédentes, **caractérisé en ce que** les éléments de ressort à lames (2) du deuxième groupe (G2) et les éléments de ressort à lames (1) du premier groupe (G1) sont fabriqués à partir de différents matériaux ou de différentes compositions de matériau, de préférence pour obtenir les différentes élasticités.

6. Dispositif agricole (100) selon l'une quelconque des revendications précédentes, **caractérisé en ce que** les éléments de ressort à lames (1) du premier groupe (G1) et/ou les éléments de ressort à lames (2) du deuxième groupe (G2) sont réalisés à partir d'un matériau métallique, à partir d'un matériau en matière plastique ou à partir d'un matériau composite.

7. Dispositif agricole (100) selon l'une quelconque des revendications précédentes, **caractérisé en ce que** les éléments de ressort à lames (1) du premier groupe (G1) et les éléments de ressort à lames (2) du deuxième groupe (G2) sont réalisés de telle sorte que s'y règle un profil force-course au moins approximativement linéaire, en forme de courbe ou dégressif quand l'unité de rangée associée du premier groupe (G1) et/ou l'unité de rangée associée du deuxième groupe (G2) sont pivotées vers le haut par rapport à la structure porteuse (10).

8. Dispositif agricole (100) selon l'une quelconque des revendications précédentes, **caractérisé en ce que**
- les unités de rangée du premier groupe (G1) présentent respectivement un corps de bras porteur (T1), sur lequel les éléments de ressort à lames (1) du premier groupe (G1) sont montés au moyen d'un système de fixation ou avec lequel les éléments de ressort à lames (1) du premier groupe (G1) sont réalisés intégralement d'un seul tenant, et/ou
- les unités de rangée du deuxième groupe (G2) présentent respectivement un corps de bras porteur (T2), sur lequel les éléments de ressort à lames (2) du deuxième groupe (G2) sont montés au moyen d'un système de fixation ou avec lequel les éléments de ressort à lames (2) du deuxième groupe (G2) sont réalisés d'un seul tenant intégralement.

9. Dispositif agricole (100) selon la revendication 7 ou 8, **caractérisé en ce que** les corps de bras porteur (T1) du premier groupe (G1) et/ou les corps de bras porteur (T2) du deuxième groupe (2) sont réalisés à partir d'un matériau métallique, de matériau en matière plastique ou d'un matériau composite, de préférence de matière plastique renforcée par des fibres.

10. Dispositif agricole (100) selon l'une quelconque des revendications précédentes, **caractérisé en ce que** les éléments de ressort à lames (1) du premier groupe (G1) et les éléments de ressort à lames (2) du deuxième groupe (G2) comprennent une section partielle (1.3) incurvée de plus de 180°, de plus de 225° ou de plus de 250°.

11. Dispositif agricole (100) selon l'une quelconque des revendications précédentes, **caractérisé en ce que**
- les unités de rangée du premier groupe (G1) dépassent moins loin de la structure porteuse (10) que les unités de rangée du deuxième groupe (G2), et/ou
- les unités de rangée du premier groupe (G1) et les unités de rangée du deuxième groupe (G2) sont positionnées de manière interchangeable mutuellement le long de la structure porteuse (10) et sont disposées de manière décalée les unes par rapport aux autres dans leur sens longitudinal (L).

12. Dispositif agricole (100) selon l'une quelconque des revendications précédentes, **caractérisé en ce que** les unités de rangée du premier groupe (G1) sont réalisées, à l'exception des éléments de ressort à lames (1) et/ou de leur extension longitudinale, avec la même structure que les unités de rangée du deuxième groupe (G2).

13. Dispositif agricole (100) selon l'une quelconque des revendications précédentes, **caractérisé en ce que** les éléments de ressort à lames (1) du premier groupe (G1) et/ou les éléments de ressort à lames (2) du deuxième groupe (G2) s'étendent à travers respectivement au moins un élément de maintien et/ou de butée (3) pour limiter leur liberté de mouvement vers le bas et/ou dans le sens longitudinal de la structure porteuse (10).

14. Dispositif agricole (100) selon la revendication 13, **caractérisé en ce que** les éléments de maintien et/ou de butée (3) sont réalisés en tant qu'étriers, colliers ou crochets.

15. Dispositif agricole (100) selon l'une quelconque des revendications précédentes, **caractérisé en ce que** la structure de support (10) forme un support commun pour les unités de rangée du premier groupe (G1) et les unités de rangée du deuxième groupe (G2).

16. Dispositif agricole (100) selon l'une quelconque des revendications précédentes, **caractérisé en ce que** la structure porteuse (10) y compris les unités de rangée du premier groupe (G1) et du deuxième groupe (G2) est réalisée de manière à pouvoir pivoter et/ou de manière ajustable en hauteur.

17. Dispositif agricole (100) selon l'une quelconque des revendications précédentes, **caractérisé en ce que** les éléments de ressort à lames (1) du premier groupe (G1) et les éléments de ressort à lames (2) du deuxième groupe (G2) sont réalisés pour le montage sur la structure porteuse (10) et permettent un montage pivotant élastique par rapport à la structure porteuse (10) .
